# EUROPÄISCHE PATENTSCHRIFT

(11) **EP 0 712 710 B1**
(45) Veröffentlichungstag und Bekanntmachung des Hinweises auf die Patenterteilung: **07.11.2001**
(21) Anmeldenummer: 95113518.5
(22) Anmeldetag: 29.08.1995
(51) Int. Cl.: B29C 45/17, B29C 45/80

(54) **Spritzgiessmaschine**
Injection moulding machine
Machine à mouler par injection

(30) Priorität: 18.11.1994 DE 4441186
(43) Veröffentlichungstag der Anmeldung: 22.05.1996
(73) Patentinhaber: Krauss-Maffei Kunststofftechnik GmbH, 80997 München (DE)
(72) Erfinder: Wohlrab, Walter, D-91781 Weissenburg (DE)
(74) Vertreter: Rucker, Bernd

(56) Entgegenhaltungen:
- WO-A-94/17977
- DE-A- 3 917 361
- DE-B- 1 109 356
- FR-A- 1 595 056
- GB-A- 1 029 641
- US-A- 2 580 078
- US-A- 4 131 596
- PATENT ABSTRACTS OF JAPAN vol. 7 no. 68 (M-201) ,19.März 1983 & JP-A-57 209799 (NITSUSEI JIYUSHI KOGYO KK) 23.Dezember 1982,
- PATENT ABSTRACTS OF JAPAN vol. 8 no. 284 (M-348) [1721] ,26.Dezember 1984 & JP-A-59 152832 (YAMASHIRO SEIKI SEISAKUSHO) 31.August 1984,

## Beschreibung

Die Erfindung betrifft eine Spritzgießmaschine gemäß Oberbegriff des Anspruchs 1.

Eine Vorrichtung dieser Art ist aus der WO-A-94/17977 bekannt, bei der die Abstützplatte und die feste Formaufspannplatte mit einem H-förmigen Maschinenrahmen verbunden sind, der eine parallel zur Schließrichtung der Spritzgießmaschine verlaufende Zugstrebe aufweist, wobei die nach oben gerichteten Arme des H-förmigen Maschinenrahmens an der festen Formaufspannplatte und an der Abstützplatte angeordnet sind und wobei zwischen den nach unten gerichteten Armen ein Kompensationsdruckelement angeordnet ist. Der H-förmige Maschinenrahmen übernimmt dabei die Funktion der Gewichtsabstützung, der Parallelhaltung der Formaufspannplatten und der Schließkraftabstützung. Da der Maschinenrahmen aufgrund der Schließkraftabstützung starken Verformungen ausgesetzt ist sind besonders aufwendige Maßnahmen zu treffen, um die Parallelität der Formaufspannplatten zu gewährleisten, wobei die Funktion der Gewichtsabstützung der Formaufspannplatten nicht oder nur unzureichend bewerkstelligt werden kann.

Eine Spritzgießmaschine ist ferner aus der EP 0 554 068 A1 bekannt, bei der die feste Formaufspannplatte fest und die bewegliche Formaufspannplatte und die Abstützplatte verschieblich am Maschinenrahmen angeordnet sind. Die Schließ- und die Auftreibkraft wird von C-förmigen Zuggliedern aufgenommen, die mit der festen Formaufspannplatte und der Abstützplatte über Gelenke verbunden sind. Die durch die sehr hohe Schließ- und Auftreibkraft im C-förmigen Zugglied hervorgerufene Verformung wird durch die Gelenke ausgeglichen, so daß die Parallelstellung der festen und der beweglichen Formaufspannplatten sichergestellt bleibt Da somit bei sehr hohen Kräften nur geringfügige Winkelausschläge auszugleichen sind, ist für die Gelenke eine Belastungsart gegeben, bei der in den Gelenkgleitflächen eine hohe Verschleißanfälligkeit gegeben ist.

Der Erfindung liegt daher die Aufgabe zugrunde, bei einer Spritzgießmaschine der genannten Art, bei der die feste Formaufspannplatte und die Abstützplatte über ein C-förmiges Zugglied miteinander verbunden sind, unter Sicherstellung einer exakten Parallelhaltung der beiden Formaufspannplatten eine verschleißlose Befestigung zwischen Zugglied und der festen Formaufspannplatte und der Abstützplatte zu bewerkstelligen.

Diese Aufgabe wird durch die Merkmale des Anspruchs 1 gelöst.

Mit dieser Lösung entfallen die Gelenke und die durch die Schließ- und Auftreibkräfte hervorgerufenen Verformungen des Rahmens bzw. der Zugglieder werden durch ein Kompensationsdruckelement nach der Maßgabe ausgeglichen, daß die Teile des Rahmens, die mit der Abstützplatte und der festen Formaufspannplatte fest verbunden sind, zumindest bei Schließdruckbelastung stets exakt parallel zueinander gehalten werden.

Vorzugsweise ist der Rahmen als H-förmiger Rahmen ausgebildet, wobei die beiden oberen Arme des H-förmigen Rahmens an der festen Formaufspannplatte und an der Abstützplatte drehfest befestigt sind und wobei die beiden unteren Arme zwischen sich das Kompensationsdruckelement angeordnet haben.

In einer bevorzugten Ausführungsform besteht das Kompensationsdruckelement aus einem an einem unteren Arm angeordneten Kompensationszylinder, dessen Kolbenstange am anderen unteren Arm abgestützt ist.

Bei der Anordnung von je einem Rahmen zu beiden Seiten des Maschinenrahmens kann dieser völlig frei gestaltet werden. So ist unter der Abstützplatte und unter den beiden Formaufspannplatten kein Freiraum zur Aufnahme von Rahmenteilen vorzusehen. Auch kann der Maschinenrahmen zur Erfüllung vielfältiger Funktionen gestaltet werden, wie z.B. mit einem Ausfallschacht für fertig gespritzte Produkte oder mit Freiräumen für Funktionselemente des Schließmechanismus. Letztlich ist durch die seitliche Anordnung zweier Rahmen auch deren Zugänglichkeit für Wartungszwecke verbessert.

Das Kompensationsdruckelement besteht vorzugsweise aus einem an einem unteren Arm angeordneten hydraulischen Kompensationszylinder, dessen Kolbenstange als Druckstange am gegenüberliegenden unteren Arm abgestützt ist.

Der Kompensationszylinder, der zweckmäßigerweise aus einem Kurzhub- bzw. Membranzylinder besteht, ist in einer bevorzugten Ausführungsform parallel zu dem hydraulischen Schließzylinder des Schließmechanismus geschaltet, wodurch ein einfacher Aufbau des Hydrauliksystems gegeben ist.

Der Kompensationszylinder kann jedoch auch über einen gesonderten Hydraulikschaltkreis mit Druckmedium beaufschlagt werden, das in Abhängigkeit von den Druckmeßwerten jeweils einer oberen und einer unteren Druckmeßdose oder von den Abstandswerten einer oberen und einer unteren optronischen Abstandsmeßeinrichtung nach der Maßgabe gesteuert wird, daß die Differenz der beiden Druckmeßwerte bzw. der beiden Abstandsmeßwerte Null wird. Damit kann bei den unter Schließdruck stehenden Formhälften deren exakte Parallelhaltung sichergestellt werden.

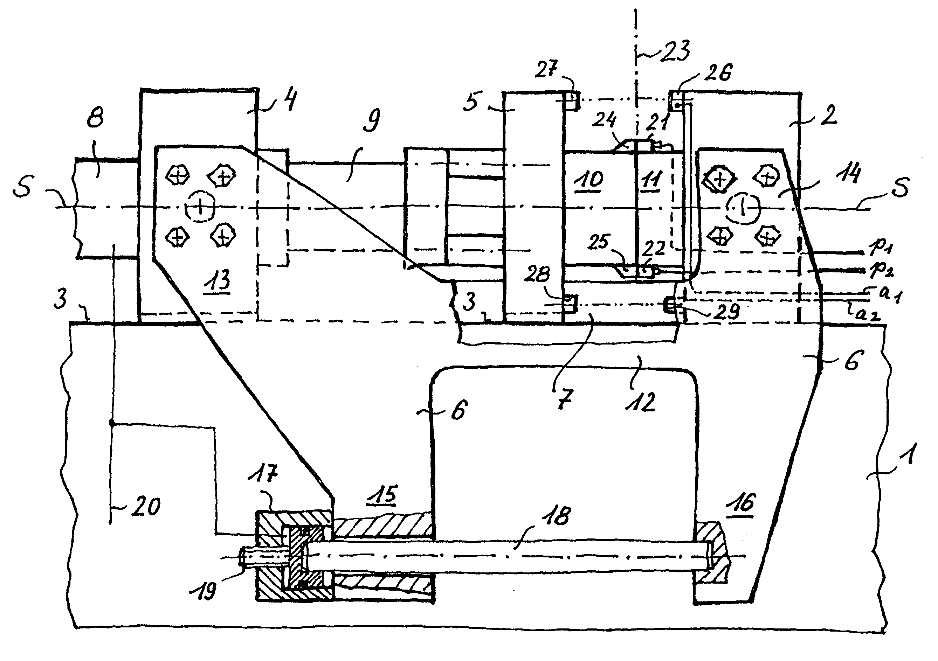

Ein Ausführungsbeispiel der Erfindung wird anhand der Zeichnung näher erläutert.

Diese zeigt die Seitenansicht auf das Mittelteil einer Spritzgießmaschine mit einem Maschinenrahmen 1, auf dem eine feste Formaufspannplatte 2 befestigt ist. Auf dem Maschinenrahmen 1 befindet sich eine Führungsfläche 3, auf der eine Abstütztplatte 4 und eine bewegliche Formaufspannplatte 5 längsverschieblich abgestützt sind.

Die Abstützplatte 4 und die feste Formaufspannplatte 2 sind über eine aus zwei Rahmen 6 und 7 bestehende Kraftübertragungseinrichtung verbunden. Die beiden Rahmen 6 und 7 sind zu beiden Seiten des Maschinenrahmens 1 angeordnet und sind in der Zeichnung bei Zwischenlage des Maschinenrahmens 1, der Abstützplatte 4 und der beiden Formaufspannplatten 2 und 5 deckungsgleich hintereinanderliegend dargestellt.

Die Abstützplatte 4 trägt einen hydraulischen Schließzylinder 8, dessen Kolben 9 fest mit der beweglichen Formaufspannplatte 5 verbunden ist. Die beiden Formaufspannplatten 2 und 5 tragen je eine Formhälfte 10 und 11.

Die beiden Rahmen 6 und 7 entsprechen einander. Nachfolgend wird der in der Zeichnung sichtbare Rahmen 6 beschrieben.

Der Rahmen 6 ist aus einer ebenen Stahlplatte gefertigt und weist eine H-förmige Gestalt auf, mit einer zur Spritzachse S parallelen mittleren Zugstrebe 12 und jeweils zwei oberen Armen 13 und 14 und zwei unteren Armen 15 und 16. Die beiden oberen Arme 13 und 14 sind mit ihren freien Enden zum einen an der Abstützplatte 4 und zum anderen an der festen Formaufspannplatte 5 befestigt. Die Befestigung ist drehfest und starr, d.h. ohne die nach dem Stand der Technik üblichen Gelenke.

Die verdrehfeste Befestigung nach der Erfindung kann z.B. jeweils durch eine Mehrfachverschraubung bewerkstelligt sein.

Am freien Ende des unteren Armes 15 befindet sich ein Kompensationszylinder 17, dessen Kolbenstange 18 am freien Ende des gegenüberliegenden unteren Armes 16 abgestützt ist. Im Kompensationszylinder 17 ist eine Justierschraube 19 zur Einstellung einer Grundposition des Kolbens des Kompensationszylinders 17 vorgesehen.

Der Schließzylinder 8 und der Kompensationszylinder 17 sind gemeinsam an die Hydraulikleitung 20 für den Schließdruckaufbau angeschlossen.

In einer nicht dargestellten Ausführungsform ist der Kompensationszylinder 17 an einen gesonderten Hydraulikschaltkreis angeschlossen, dessen Druck in der Schließphase der Spritzgießmaschine in Abhängigkeit von den beiden Meßwerten p₁ und p₂ einer oberen und einer unteren Druckmeßdose 21 und 22 nach der Maßgabe gesteuert wird, daß der Differenzwert der beiden Meßwerte zu Null wird.

Die Druckmeßdosen 21 und 22 sind an der rechten Formhälfte 11 befestigt und befinden sich in der Formtrennebene 23 in Berührungskontakt mit jeweils einem Kontaktteil 24 und 25 der linken Formhälfte 10.

In einer anderen Ausführungsform können anstelle der Meßwerte aus den Druckmeßdosen 21 und 22 die Meßwerte a₁ und a₂ von berührungslosen Abstandsmeßwertgebern 26 und 27 sowie 28 und 29 verwendet werden, die an den beiden Formaufspannplatten 2 und 5 befestigt sind.

Anstelle der jeweils aus einer Stahlplatte gefertigten Rahmen 6 und 7 sind auch aus mehreren Einzelteilen fest zusammengefügte Rahmen geeignet.

Im Betrieb der Spritzgießmaschine wird gleichzeitig mit dem Schließdruckaufbau über den Schließzylinder 8 der Kompensationszylinder 17 mit Druckmedium beaufschlagt, wodurch die durch den Schließdruck in den Rahmen 6 und 7 hervorgerufenen elastischen Verformungen der oberen Arme 13 und 14 dahingehend kompensiert werden, daß die oberen Arme 13 und 14 an ihren Befestigungstellen an der Abstützplatte 4 bzw. der festen Formaufspannplatte 2 exakt parallel zueinander ausgerichtet sind.

In der dargestellten Ausführungsform sind bei jedem der beiden Rahmen 6 und 7 die geometrischen Abmessungen der Zugstrebe 12, der oberen und der unteren Arme 13, 14 und 15, 16 und die Abmessungen des Kompensationszylinders 17 so ausgelegt, daß die Beaufschlagung des Kompensationszylinders 17 mit Druckmedium aus der Hydraulikleitung 20 in der Schließdruckphase zu der vorbeschriebenen exakten Parallelstellung der oberen Arme 13 und 14 führt.

Die Länge der oberen Arme 13 und 14 ist so gewählt, daß zwischen den beiden Formaufspannplatten 2 und 5 eine völlig freie Zugänglichkeit von beiden Seiten und von oben besteht. Die Länge der unteren Arme 15 und 16 kann dabei ca. der Höhe des Maschinenrahmens 1 entsprechen.

Die im Betrieb durch die Schließ- und Auftreibkraft in den Rahmen 6 und 7 sich einstellende Verformung, die nach dem Stand der Technik durch Gelenke an der Abstützplatte 4 und an der festen Formaufspannplatte 2 ausgeglichen wird, wird nach der Erfindung durch Aufspreitzung der unteren Arme 15 und 16 kompensiert, durch die in den Rahmen 6 und 7 gewissermaßen eine Gegenverformung erzeugt wird, die an den Befestigungsstellen an der Abstützplatte 4 und an der festen Formaufspannplatte 2 zu einer absoluten Parallelstellung der beiden Platten führt.

Diese Parallelstellung kann mittels an der Trennebene 23 der beiden Formhälften 10 und 11 angeordneter Druckmeßdosen 21 und 22 und/oder mittels an den beiden Formaufspannplatten 2 und 5 angeordneter Abstandsmeßwertgeber 26, 27, 28 und 29 überprüft oder, wie vorbeschrieben, durch geregelte Ansteuerung des Kompensationszylinders 17 mit Druckmedium automatisch eingestellt werden. Damit kann mit ein und derselben Dimensionierung der Rahmen 6 und 7 sowie des Kompensationszylinders 17 den untersschiedlichen Schließ- und Auftreibkräften bei Verwendung unterschiedlicher Werkzeuge Rechnung getragen werden.

## Patentansprüche

1. Spritzgießmaschine mit einem Maschinenrahmen (1), einer fest mit dem Maschinenrahmen (1) verbundenen festen Formaufspannplatte (2) und mit je einer verschieblich am Maschinenrahmen (1) abgestützten beweglichen Formaufspannplatte (5) und Abstützplatte (4), die einen mit der beweglichen Formaufspannplatte (5) gekoppelten Schließmechanismus (8,9) trägt, und die mit der festen Formaufspannplatte (2) über eine, einen freien Zugang von den Seiten und von oben zwischen der festen und der beweglichen Formaufspannplatte (2,5) zulassende Kraftübertragungseinrichtung verbunden ist, wobei die Kraftübertragungseinrichtung eine parallel zur Schließrichtung(S)der Spritzgießmaschine sich erstreckende Zugvorrichtung aufweist, auf deren einer Seite die Formaufspannplatten (2,5) und die Abstützplatte (4) und auf deren anderer Seite ein Kompensationsdruckelement angeordnet sind, **dadurch gekennzeichnet, dass** die Kraftübertragungseinrichtung aus je einem zu beiden Seiten der Formaufspannplatten (2,5) und der Abstützplatte (4) angeordneten Rahmen (6,7) besteht, dessen Zugvorrichtung sich aus einer Zugstrebe (12) und aus jeweils zwei an den beiden Enden der Zugstrebe (12) angeordneten oberen und unteren Armen (13,14 und 15,16) zusammensetzt, wobei von den oberen Armen der eine Arm (13) an seinem freien Ende fest mit der Abstützplatte (4) und der andere Arm (14) an seinem freien Ende fest mit der festen Formaufspannplatte (2) verbunden ist, and wobei die entgegengesetzt zu den oberen Armen (13,14) nach unten gerichteten Arme (15,16) an ihrem freien Ende über das Kompensationsdruckelement miteinander verbunden sind.

2. Spritzgießmaschine nach Anspruch 1, **dadurch gekennzeichnet, daß** das Kompensationsdruckelement aus einem an einem unteren Arm (15) angeordneten hydraulischen Kompensationszylinder (17) besteht, dessen Kolbenstange (18) am anderen unteren Arm (16) abgestützt ist.

3. Spritzgießmaschine nach Anspruch 2, **dadurch gekennzeichnet, daß** der Schließmechanismus aus einem hydraulischen Schließzylinder (8) besteht, der gemeinsam mit dem Kompensationszylinder (17) an die Hydraulikleitung (20) zum Schließdruckaufbau angeschlossen ist.

4. Spritzgießmaschine nach einem der Ansprüche 1 bis 3, **dadurch gekennzeichnet, daß** zu beiden Seiten des Maschinenrahmens (1) bzw. der festen Formaufspannplatte (2) und der Abstützplatte (4) je ein Rahmen (6,7) angeordnet ist.

5. Spritzgießmaschine nach einem der Ansprüche 1, 2 und 4, **dadurch gekennzeichnet, daß** an den Formtrennflächen (Formtrennebene 23) der auf den beiden Formaufspannplatten (2,5) befestigten Formhälften (10,11) jeweils eine obere und eine untere Druckmeßdose (21,22) angeordnet sind und daß der Kompensationszylinder (17) nach der Maßgabe mit Druckmedium beaufschlagt wird, daß der Unterschied der Druckmeßwerte p₁ und p₂ zwischen oberer und unterer Druckmeßdose Null wird.

6. Spritzgießmaschine nach einem der Ansprüche 1, 2 und 4, **dadurch gekennzeichnet, daß** an den Ober- und Unterseiten der Formaufspannplatten (2 und 5) jeweils optronische Abstandsmeßeinrichtungen (26,27, 28,29) angeordnet sind und daß der Kompensationszylinder (17) nach der Maßgabe mit Druckmedium beaufschlagbar ist, daß der Unterschied der Meßwerte a₁ und a₂ der oberen und der unteren Abstandsmeßeinrichtungen (26,27 und 28,29) Null wird.

7. Spritzgießmaschine nach Anspruch 6, **dadurch gekennzeichnet, daß** die optronischen Abstandsmeßeinrichtungen aus einer Laseroptik bestehen.

8. Spritzgießmaschine nach einem der Ansprüche 1 bis 7, **dadurch gekennzeichnet, daß** die unteren Arme (15,16) länger als die oberen Arme (13,14) sind.

9. Spritzgießmaschine nach einem der Ansprüche 1 bis 8, **dadurch gekennzeichnet, daß** der Rahmen (6,7) einstückig aus einer Stahlplatte gefertigt ist.

10. Spritzgießmaschine nach einem der Ansprüche 1 bis 9, **dadurch gekennzeichnet, daß** das Kompensationsdruckelement aus einem Membranzylinder besteht.

11. Spritzgießmaschine nach einem der Ansprüche 1 bis 10, **dadurch gekennzeichnet, daß** der Rahmen (6,7) ein H-förmiges Plattenbauteil ist.

12. Spritzgießmaschine nach einem der Ansprüche 1 bis 11, **dadurch gekennzeichnet, daß** das Kompensationsdruckelement (17) zur Grundeinstellung mit einer mechanischen Justierung (Justierschraube 10) versehen ist.

## Claims

1. Injection moulding machine with a machine frame (1), a fixed platen (2) rigidly connected to the machine frame (1) and with a movable platen (5) and supporting plate (4) respectively, displaceably supported on the machine frame (1), which supporting plate, supports a clamping mechanism (8, 9) coupled to the movable platen (5) and which is connected by a force transmission device permitting free access from the sides and from above between the fixed and the movable platen (2, 5) to the fixed platen (2), the force transmission device having a tensile device extending parallel to the clamping direction (S) of the injection moulding machine, on the one side of which tensile device are arranged the platens (2, 5) and the supporting plate (4) and on the other side of which is arranged a compensating pressure element, **characterised in that** the force transmission device consists of a frame (6, 7) arranged on either side of the platens (2, 5) and the supporting plate (4) respectively, the tensile device of which frame is composed of a tensile strut (12) and two respective upper and lower arms (13, 14 and 15, 16) arranged on the two ends of the tensile strut (12), the one arm (13) of the upper arms being rigidly connected at its free end to the supporting plate (4) and the other arm (14) being rigidly connected at its free end to the fixed platen (2), and the arms (15, 16) directed downwards and opposite the upper arms (13, 14) being connected to one another at their free end by the compensating pressure element.

2. Injection moulding machine according to claim 1, **characterised in that** the compensating pressure element consists of a hydraulic compensating cylinder (17) arranged on a lower arm (15), the piston rod (18) of which cylinder is supported on the other lower arm (16).

3. Injection moulding machine according to claim 2, **characterised in that** the clamping mechanism consists of a hydraulic clamping cylinder (8) which, together with the compensating cylinder (17), is connected to the hydraulic line (20) to build up clamping pressure.

4. Injection moulding machine according to one of claims 1 to 3, **characterised in that** a frame (6, 7) is arranged on either side of the machine frame (1) and the fixed platen (2) and the supporting plate (4) respectively.

5. Injection moulding machine according to one of claims 1, 2 and 4, **characterised in that** an upper and a lower pressure transducer (21, 22) respectively are arranged on the mould parting surface (mould parting line 23) of the mould halves (10, 11) secured to the two platens (2, 5) and **in that** the compensating cylinder (17) is subjected to hydraulic fluid as required, such that the difference in the pressure measurement values p₁ and p₂ between the upper and lower pressure transducer is zero.

6. Injection moulding machine according to one of claims 1, 2 and 4, **characterised in that** optronic distance measuring devices (26, 27, 28, 29) are arranged on the top and bottom sides of the platens (2 and 5) respectively and **in that** the compensating cylinder (17) can be subjected to hydraulic fluid as required, such that the difference in the measured values a₁ and a₂ of the upper and the lower distance measuring devices (26, 27 and 28, 29) is zero.

7. Injection moulding machine according to claim 6, **characterised in that** the optronic distance measuring devices consist of laser optics.

8. Injection moulding machine according to one of claims 1 to 7, **characterised in that** the lower arms (15, 16) are longer than the upper arms (13, 14).

9. Injection moulding machine according to one of claims 1 to 8, **characterised in that** the frame (6, 7) is produced as one piece from a steel plate.

10. Injection moulding machine according to one of claims 1 to 9, **characterised in that** the compensating pressure element consists of a diaphragm cylinder.

11. Injection moulding machine according to one of claims 1 to 10, **characterised in that** the frame (6, 7) is an H-shaped plate-type component.

12. Injection moulding machine according to one of claims 1 to 11, **characterised in that** the compensating pressure element (17) is provided with mechanical adjusting means (adjusting screw 10) for basic adjustment.

## Revendications

1. Machine à mouler par injection comprenant un corps de machine (1), un plateau porte-moule fixe (2) relié de manière inamovible au corps de machine (1) et respectivement un plateau porte-moule (5) appuyé contre le corps de machine (1) de manière à se déplacer et un plateau de support (4) qui supporte un mécanisme de fermeture (8,9) couplé au plateau porte-moule mobile (5), et qui est reliée au plateau porte-moule fixe (2) par l'intermédiaire d'un dispositif de transmission de force permettant un accès libre à partir des côtés et du dessus entre les plateaux porte-moule fixe et mobile (2, 5), le dispositif de transmission présentant un dispositif de traction s'étendant parallèlement au sens de fermeture (S) de la machine à mouler par injection, les plateaux porte-moule (2,5) et le plateau de support (4) étant ménagés sur un côté du dispositif de traction et un organe de pression compensateur étant ménagé sur l'autre côté de ce dernier, **caractérisée en ce que** le dispositif de transmission de force se compose respectivement d'un châssis (6, 7) disposé des deux côtés des plateaux porte-moule (2, 5) et du plateau de support (4), le dispositif de traction du châssis se composant d'un tirant (12) et de deux bras (13, 14 et 15, 16) respectivement disposés aux deux extrémités du tirant (12), moyennant quoi, à partir du bras supérieur, le premier bras (13) est relié de manière fixe par son extrémité libre au plateau de support (4), et l'autre bras (14) est relié de manière fixe par son extrémité libre au plateau porte-moule (2), et moyennant quoi les bras (15, 16) orientés vers le bas à l'opposé des bras supérieurs (13, 14) sont mutuellement reliés par leurs extrémités libres grâce à l'organe de pression compensateur.

2. Machine à mouler par injection selon la revendication 1, **caractérisée en ce que** l'organe de pression compensateur se compose d'un vérin de compensation hydraulique (17) disposé sur un bras inférieur (15), la tige de piston (18) du vérin s'appuyant sur l'autre bras inférieur (16).

3. Machine à mouler par injection selon la revendication 2, **caractérisée en ce que** le mécanisme de fermeture se compose d'un vérin de fermeture hydraulique (8), qui, conjointement au vérin de compensation (17), est raccordé à la canalisation hydraulique (20) de manière à créer la pression de fermeture.

4. Machine à mouler par injection selon l'une quelconque des revendications 1 à 3, **caractérisée en ce qu'**un châssis (6, 7) est disposé des deux côtés du corps de la machine (1), respectivement sur le plateau porte-moule fixe (2) et sur le plateau de support (4).

5. Machine à mouler par injection selon l'une quelconque des revendications 1, 2 et 4, **caractérisée en ce que**, au niveau des surfaces de séparation du moule (plans de séparation du moule 23) des blocs mobiles (10, 11) fixés sur les deux plateaux porte-moule (2, 5) sont respectivement disposées une boîte dynamométrique supérieure et inférieure (21, 22), et **en ce que** le vérin de compensation (17) est sollicité par un milieu sous pression si l'on s'en tient au fait que la différence des valeurs manométriques p₁ et p₂ est nulle entre la boîte dynamométrique supérieure et inférieure.

6. Machine à mouler par injection selon l'une quelconque des revendications 1, 2 et 4, **caractérisée en ce que** des dispositifs de mesure de distance optroniques (26, 27, 28, 29) sont respectivement placés au niveau des faces supérieure et inférieure des plateaux porte-moule (2 et 5), et **en ce que** le vérin de compensation (17) peut être sollicité par un milieu sous pression si l'on s'en tient au fait que la différence des valeurs a₁ et a₂ des dispositifs de mesure de distance supérieur et inférieur (26, 27 et 28, 29) est nulle.

7. Machine à mouler par injection selon la revendication 6, **caractérisée en ce que** les dispositifs de mesure de distance optroniques se composent d'un dispositif optique à laser.

8. Machine à mouler par injection selon l'une quelconque des revendications 1 à 7, **caractérisée en ce que** les bras inférieurs (15, 16) sont plus longs que les bras supérieurs (13, 14).

9. Machine à mouler par injection selon l'une quelconque des revendications 1 à 8, **caractérisée en ce que** le châssis (6, 7) est fabriqué d'une seule pièce à partir d'une plaque d'acier.

10. Machine à mouler selon l'une quelconque des revendications 1 à 9, **caractérisée en ce que** l'organe de pression compensateur se compose d'un vérin à membrane.

11. Machine à mouler par injection selon l'une quelconque des revendications 1 à 10, **caractérisée en ce que** le châssis (6, 7) constitue un plateau en forme de H.

12. Machine à mouler par injection selon l'une quelconque des revendications 1 à 11, **caractérisée en ce que** l'organe de pression compensateur (17) est doté d'un ajustage (vis de réglage 10) pour réaliser un réglage de base.
